# EUROPÄISCHE PATENTANMELDUNG

(11) **EP 1 813 487 A1**
(43) Veröffentlichungstag der Anmeldung: **01.08.2007**
(21) Anmeldenummer: 07000889.1
(22) Anmeldetag: 17.01.2007
(51) Int. Cl.: B60S 1/08, G01N 21/43

(54) **Optische Sensorvorrichtung**

(30) Priorität: 18.01.2006 DE 202006000742 U
(71) Anmelder: TRW Automotive Electronics & Components GmbH & Co. KG, 78315 Radolfzell (DE)
(72) Erfinder: Mordau, Ulf, 78652 Deisslingen (DE); Backes, Ulrich Dr., 78315 Radolfzell (DE)
(74) Vertreter: Strass, Jürgen

(57) **Zusammenfassung**

Eine optische Sensorvorrichtung umfaßt eine Lichtleiterstruktur, die mit einer Koppelfläche (20) an eine gegenüberliegende Gegenfläche einer Scheibe (22), insbesondere einer Windschutzscheibe eines Kraftfahrzeugs, ankoppelbar ist und zwei Teilkörper (16, 18) aufweist. Die optische Sensorvorrichtung umfaßt ferner einen optischen Sender (10), der ein Strahlenbündel in den ersten der zwei Teilkörper (16) einkoppelt, einen optischen Empfänger (12), der ein aus dem zweiten Teilkörper (18) austretendes Strahlenbündel empfängt, und eine Leiterplatte (14), auf der der Sender (10) und der Empfänger (12) angeordnet sind. Die Leiterplatte (14) ist parallel zur Koppelfläche (20) angeordnet. Die Lichtleiterstruktur ist so gestaltet, daß der Zentralstrahl (28) des Senders (10) senkrecht zur Koppelfläche (20) in den ersten Teilkörper (16) eintritt und senkrecht zur Koppelfläche (20) aus dem zweiten Teilkörper (18) austritt.

## Beschreibung

Die Erfindung betrifft eine optische Sensorvorrichtung mit einer Lichtleiterstruktur, die mit einer Koppelfläche an eine gegenüberliegende Gegenfläche einer Scheibe, insbesondere Windschutzscheibe eines Kraftfahrzeugs, ankoppelbar ist, und zwei Teilkörper aufweist, ferner mit einem optischen Sender, der ein Strahlenbündel in den ersten der zwei Teilkörper einkoppelt, einem optischen Empfänger, der ein aus dem zweiten Teilkörper austretendes Strahlenbündel empfängt, und einer Leiterplatte, auf der der Sender und der Empfänger angeordnet sind.

Eine solche Sensorvorrichtung ist aus der EP 0 833 764 B1 bekannt. Bei dieser bekannten Vorrichtung ist die Leiterplatte senkrecht zur Windschutzscheibe eines Kraftfahrzeugs angeordnet. Der vom Sender parallel zur Ebene der Windschutzscheibe ausgestrahlte Lichtstrahl wird über einen Eingangsabschnitt eines Strahlungsleiters in die Windschutzscheibe eingekoppelt. Dazu wird der Lichtstrahl zunächst an einer ersten Ablenkfläche um 90° in eine Richtung parallel zur Leiterplatte abgelenkt, bevor er über zwei weitere Ablenkflächen durch eine parallel zur Windschutzscheibe angeordnete Koppelfläche aus dem Eingangsabschnitt aus- und in die Windschutzscheibe eintritt. Nach mehreren Reflexionen in der Windschutzscheibe tritt der Lichtstrahl aus der Windschutzscheibe aus und wird über einen symmetrisch zum Eingangsabschnitt ausgebildeten Ausgangsabschnitt auf den Empfänger auf der Leiterplatte gerichtet.

Die Erfindung schafft eine kostengünstiger herstellbare optische Sensorvorrichtung mit einem einfacheren und kompakteren Aufbau.

Gemäß der Erfindung ist bei einer Sensorvorrichtung der eingangs genannten Art vorgesehen, daß die Leiterplatte parallel zur Koppelfläche angeordnet ist und die Lichtleiterstruktur so gestaltet ist, daß der Zentralstrahl des Senders senkrecht zur Koppelfläche in den ersten Teilkörper eintritt und senkrecht zur Koppelfläche aus dem zweiten Teilkörper austritt. Die erfindungsgemäße Anordnung der Leiterplatte mit Sender um Empfänger spart nicht nur Bauraum in der Richtung senkrecht zur Windschutzscheibe, sondern ermöglicht zudem einen Aufbau, der mit weniger Ablenkflächen auskommt. Im Vergleich zu der aus der EP 0 833 764 B1 bekannten Konstruktion, bei der der vom Sender ausgestrahlte Lichtstrahl dreimal abgelenkt wird, bevor er in die Windschutzscheibe eintritt, sind bei der erfindungsgemäßen Konstruktion nur zwei Ablenkflächen notwendig. Gleiches gilt für die Strahlführung zum Empfänger nach dem Austritt aus der Windschutzscheibe.

Vorteilhafte und zweckmäßige Ausgestaltungen der erfindungsgemäßen Sensorvorrichtung ergeben sich aus den Unteransprüchen.

Die Erfindung wird nachfolgend anhand eines vereinfachten Ausführungsbeispiels unter Bezugnahme auf die beigefügten Zeichnungen beschrieben. In den Zeichnungen zeigen:
- Figur 1 eine aufgefaltete zweidimensionale Darstellung der optischen Komponenten einer erfindungsgemäßen Sensorvorrichtung;
- Figuren 2a, 2b Schnittansichten der erfindungsgemäßen Sensorvorrichtung mit unterschiedlicher Kopplung an die Scheibe; und

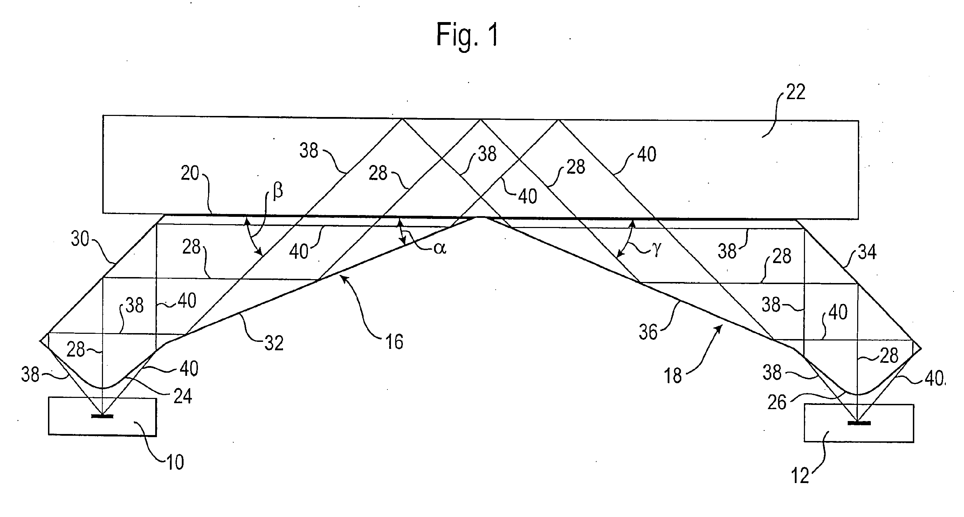

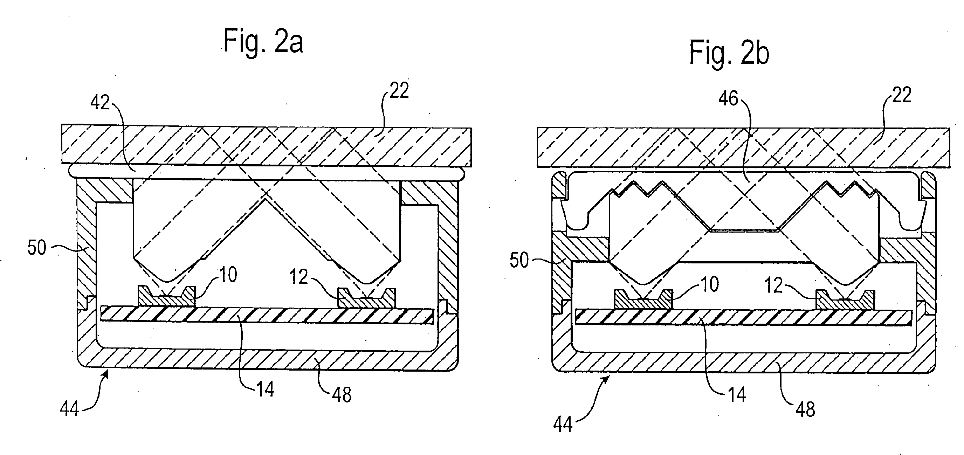

- Figur 1 eine Explosionsansicht der Sensorvorrichtung aus Figur 2a.

In Figur 1 ist eine aufgefaltete zweidimensionale Darstellung der optischen Komponenten einer Sensorvorrichtung gezeigt, also keine klassische Schnittansicht. Die aufgefaltete Darstellung wurde gewählt, weil darin der grundsätzliche Aufbau der Sensorvorrichtung und der Strahlengang besser ersichtlich sind als in einer Schnittdarstellung. Außerdem ist die tatsächliche dreidimensionale Form der Sensorvorrichtung für die Erfindung nicht wesentlich.

Die Sensorvorrichtung weist einen optischen Sender 10 und einen optischen Empfänger 12 in Form einer Infrarot-Sendediode bzw. einer Infrarot-Empfangsdiode auf, die auf einer (in Figur 1 nicht dargestellten) Leiterplatte 14 angeordnet sind. Eine Lichtleiterstruktur besteht im wesentlichen aus zwei gleichartig aufgebauten Teilkörpern 16, 18 die einen symmetrischen, durchgehenden Lichtleiterkörper aus transparentem Kunststoffmaterial bilden. Die Lichtleiterstruktur ist mit einer Koppelfläche 20 an eine gegenüberliegende Gegenfläche einer Scheibe 22 angekoppelt. Die Kontaktfläche 20 ist parallel zur Leiterplatte 14 mit dem Sender 10 und dem Empfänger 12 angeordnet, so daß sich auch die Leiterplatte 14 in einer zur Scheibe 22 parallelen Ebene erstreckt. An das dem Sender 10 zugewandten Ende des ersten Teilkörpers 16 ist eine asphärische Linse 24 angeformt, die dem Sender 10 gegenüberliegt. Eine zweite asphärische Linse 26 ist an den zweiten Teilkörper 18 angeformt und liegt dem Empfänger 12 gegenüber.

Ein vom Sender 10 ausgestrahltes Lichtbündel tritt durch die erste asphärische Linse 24 in den ersten Teilkörper 16 der Lichtleiterstruktur ein. Von diesem Lichtbündel wird zunächst nur dessen Zentralstrahl 28 betrachtet, der in einer zur Koppelfläche 20 senkrechten Richtung in den ersten Teilkörper 16 eintritt. An einer ersten Ablenkfläche 30, die in einem 45°-Winkel zum Zentralstrahl 28 geneigt ist, wird der Zentralstrahl 28 unter Totalreflexion um 90° abgelenkt, so daß er parallel zur Koppelfläche 20 orientiert ist. Nach einer weiteren Totalreflexion an einer der ersten Ablenkfläche 30 gegenüberliegenden und unter einem bestimmten spitzen Winkel α zur Koppelfläche 20 geneigten zweiten Ablenkfläche 32 tritt der Zentralstrahl 28 durch die Koppelfläche 20 aus dem ersten Teilkörper 16 aus und unter einem definierten Eintrittswinkel β in die Scheibe 22 ein.

Der Zentralstrahl 28 erfährt an der der Koppelfläche 20 entgegengesetzten Fläche der Scheibe 22 eine einzige Totalreflexion und tritt unter einem Austrittswinkel y, der dem Eintrittswinkel β entspricht, aus der Scheibe 22 aus und gelangt durch die Koppelfläche 20 in den zweiten Teilkörper 18 der Lichtleiterstruktur. Aufgrund des symmetrischen Aufbaus der Lichtleiterstruktur ist der Strahlengang im zweiten Teilkörper 18 symmetrisch zum Strahlengang im ersten Teilkörper 16, d.h. der Zentralstrahl 28 ist nach einer ersten Totalreflexion an einer dritten Ablenkfläche 34 parallel zur Koppelfläche 20 und nach einer zweiten Totalreflexion an einer vierten Ablenkfläche 36 senkrecht zur Koppelfläche 20 orientiert. Somit tritt der Zentralstrahl 28 senkrecht zur Koppelfläche 20 durch die zweite asphärische Linse 26 aus dem zweiten Teilkörper 18 aus und trifft auf den auf der Leiterplatte 14 angeordneten Empfänger 12.

In Figur 1 ist auch der Strahlengang zweier Randstrahlen 38, 40 des Lichtbündels dargestellt. Die erste asphärische Linse 24 sorgt dafür, daß alle Strahlen des Lichtbündels parallel zum Zentralstrahl 28 in den ersten Teilkörper 16 eintreten. In der Lichtleiterstruktur und in der Scheibe 22 erfahren alle Strahlen die gleichen fünf Totalreflexionen (zwei im ersten Teilkörper 16, eine in der Scheibe 22 und zwei im zweiten Teilkörper 18) wie der Zentralstrahl 28. Die zweite asphärische Linse 26 am zweiten Teilkörper 8 bündelt die aus der Lichtleiterstruktur austretenden Lichtstrahlen, so daß alle Strahlen auf den Empfänger 12 gerichtet sind.

In den Figuren 2a und 2b sind zwei Varianten der Kopplung der Sensorvorrichtung an die Scheibe 22 gezeigt. Gemäß der Variante der Figur 2a ist zwischen der Sensorvorrichtung und der Scheibe 22 ein elastisches Kissen 42 vorgesehen, wogegen bei der Variante der Figur 2b ein am Gehäuse 44 der Sensorvorrichtung befestigter Strukturkoppler 46 auf die Scheibe 22 aufgeklebt ist.

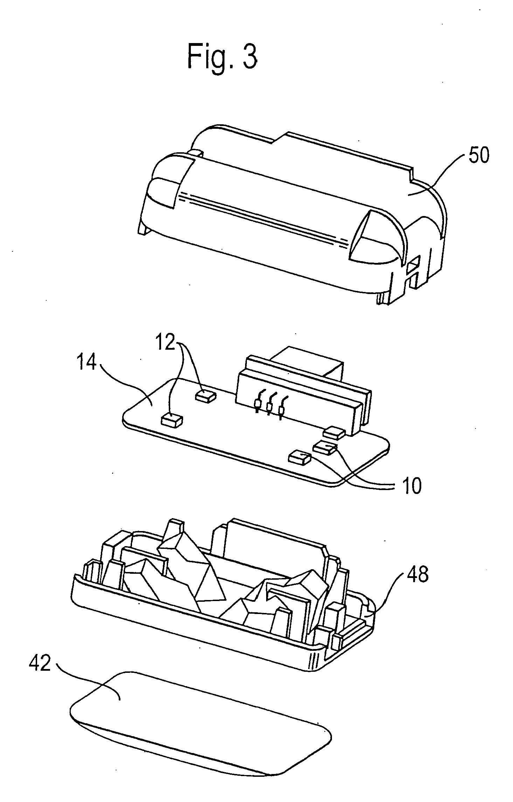

Die Figur 3 zeigt die Einzelteile der Sensorvorrichtung aus Figur 2a. Im Gehäuse 44, das aus einem dem elastischen Kissen 42 und der Scheibe 22 zugewandten Gehäuseteil 48 und einem Deckel 50 besteht, sind die Leiterplatte 14 und zwei Sätze der oben beschriebenen optischen Komponenten aufgenommen. Dementsprechend sind auf der Leiterplatte 14 auch zwei Sender 10 und zwei Empfänger 12 angeordnet.

Die optische Sensorvorrichtung eignet sich insbesondere, jedoch nicht ausschließlich, als Regensensor, der an der Windschutzscheibe eines Kraftfahrzeugs angebracht werden kann.

## Patentansprüche

1. Optische Sensorvorrichtung mit einer Lichtleiterstruktur, die mit einer Koppelfläche (20) an eine gegenüberliegende Gegenfläche einer Scheibe (22), insbesondere Windschutzscheibe eines Kraftfahrzeugs, ankoppelbar ist und zwei Teilkörper (16, 18) aufweist, ferner mit einem optischen Sender (10), der ein Strahlenbündel in den ersten der zwei Teilkörper (16) einkoppelt, einem optischen Empfänger (12), der ein aus dem zweiten Teilkörper (18) austretendes Strahlenbündel empfängt, und einer Leiterplatte (14), auf der der Sender (10) und der Empfänger (12) angeordnet sind, **dadurch gekennzeichnet, daß** die Leiterplatte (14) parallel zur Koppelfläche (20) angeordnet ist und die Lichtleiterstruktur so gestaltet ist, daß der Zentralstrahl (28) des Senders (10) senkrecht zur Koppelfläche (20) in den ersten Teilkörper (16) eintritt und senkrecht zur Koppelfläche (20) aus dem zweiten Teilkörper (18) austritt.

2. Sensorvorrichtung nach Anspruch 1, **dadurch gekennzeichnet, daß** der Zentralstrahl (28) des Senders (10) nach einer ersten Totalreflexion im ersten Teilkörper (16) der Lichtleiterstruktur parallel zur Koppelfläche (20) orientiert ist.

3. Sensorvorrichtung nach Anspruch 2, **dadurch gekennzeichnet, daß** der Zentralstrahl (28) des Senders (10) nach einer ersten Totalreflexion im zweiten Teilkörper (18) der Lichtleiterstruktur parallel zur Koppelfläche (20) und nach einer zweiten Totalrefklektion senkrecht zur Koppelfläche (20) orientiert ist.

4. Sensorvorrichtung nach einem der vorhergehenden Ansprüche, **dadurch gekennzeichnet, daß** der erste Teilkörper (16) eine angeformte erste asphärische Linse (24) gegenüberliegend zum Sender (10) aufweist.

5. Sensorvorrichtung nach einem der vorhergehenden Ansprüche, **dadurch gekennzeichnet, daß** der zweite Teilkörper (18) eine angeformte zweite asphärische Linse (26) gegenüberliegend zum Empfänger (12) aufweist.

6. Sensorvorrichtung nach einem der vorhergehenden Ansprüche, **dadurch gekennzeichnet, daß** die zwei Teilkörper (16, 18) einen durchgehenden Lichtleiterkörper aus transparentem Kunststoffmaterial bilden.

7. Sensorvorrichtung nach einem der vorhergehenden Ansprüche, **dadurch gekennzeichnet, daß** der Zentralstrahl (28) des Senders (10) eine einmalige Totalreflexion an der Scheibe (22) erfährt.
